# EUROPEAN PATENT SPECIFICATION

(11) **EP 4 492 254 B1**
(45) Date of publication and mention of the grant of the patent: **04.03.2026**
(21) Application number: 24180592.8
(22) Date of filing: 06.06.2024
(51) Int. Cl.: G06F 16/2453

(54) **DATABASE-BASED DATA QUERY METHOD, APPARATUS, ELECTRONIC DEVICE AND STORAGE MEDIUM**
DATENBANKBASIERTES DATENABFRAGEVERFAHREN, VORRICHTUNG, ELEKTRONISCHE VORRICHTUNG UND SPEICHERMEDIUM
PROCÉDÉ D'INTERROGATION DE DONNÉES BASÉ SUR UNE BASE DE DONNÉES, APPAREIL, DISPOSITIF ÉLECTRONIQUE ET SUPPORT DE STOCKAGE

(30) Priority: 11.07.2023 CN 202310847964
(43) Date of publication of application: 15.01.2025
(73) Proprietor: Beijing Volcano Engine Technology Co., Ltd., Beijing 100190 (CN)
(72) Inventor: CHEN, Yuxiang, Los Angeles, 90066 (US); ZHANG, Li, Los Angeles, 90066 (US); CHEN, Jianjun, Los Angeles, 90066 (US); SHI, Rui, Beijing, 100028 (CN)
(74) Representative: Marks & Clerk LLP

(56) References cited:
- CN-A- 115 309 777
- CN-C- 100 397 396
- US-A1- 2003 208 484
- US-A1- 2007 143 246

## Description

### TECHNICAL FIELD

The invention relates to a database-based data query method, apparatus, electronic device and storage medium.

### BACKGROUND

When searching data in a database, the desired data can be obtained by searching in the database according to search requirements.

When searching for data in the database, there may be a variety of search modes, and the query efficiency is different when searching for data under different search modes. The better way is to select the search mode with higher query efficiency for actual data query, so as to improve the data search efficiency. Therefore, how to quickly and accurately determine the query efficiency of each query mode has become an urgent problem in the related art.

Reference 1(US20070143246A1) describes a database application re-uses one or more query execution strategies for a given logical query, and saves historical data concerning query execution performance under differing execution parameters. The historical data is analyzed to identify environmental variables and/or imported variables which significantly affect execution performance. Preferably, an auxiliary data structure includes, for each of multiple execution strategies, a respective set of imported and environmental variables and respective average cost measure, such as execution time. An analytical tool compares multiple different strategies to identify imported and/or environmental variables which caused a different strategy to be used, and resultant average cost. Preferably, the tool can also compare variation within the same strategy.

Reference 2(US20030208484A1) describes an elegant solution for processing multi-feature queries, which considers the differing access costs associated with each feature. Access cost is a critical factor in determining how individual features should be processed in terms of retrieving through sorted or random access, and, hence, in minimizing the overall query response time. The present invention operates dynamically during query processing and seeks to minimize the total query cost in terms of number of features retrieved and cost for access. It works by evaluating different combinations of feature access plans (sorted and random access) according to the number of retrieved features and forward access costs, and it selects the lowest cost plan. Experimental results on practical data show a significant speed-up in multi-features queries using the proposed solution.

Reference 3(CN100397396C) describes an inquiry plan caching method and a system based on the predicate key degree analyzing.

### SUMMARY

The invention is defined in the independent claims.

Advantageous modifications are set forth in the dependent claims.

### BRIEF DESCRIPTION OF DRAWINGS

In order to explain the technical scheme of the embodiments of the present disclosure more clearly, the following will briefly introduce the accompanying drawings needed in the embodiments, which are incorporated into and constitute a part of the specification. These drawings show the embodiments in line with the present disclosure and together with the description, serve to explain the technical scheme of the present disclosure. It should be understood that the accompanying drawings only show some embodiments of the present disclosure, and they should not be regarded as limiting the scope of the present disclosure. For those skilled in the art, other related drawings can be obtained according to these drawings without inventive efforts.
Fig. 1 shows a flowchart of a database-based data query method provided by embodiments of the present disclosure;
Fig. 2 shows a schematic diagram for converting an obtained abstract syntax tree into a relational algebraic tree provided by embodiments of the present disclosure;
Fig. 3 shows a schematic diagram of a database-based data query apparatus provided by embodiments of the present disclosure;
Fig. 4 shows a schematic diagram of an electronic device provided by embodiments of the present disclosure.

### DETAILED DESCRIPTION

In order to make the purpose, technical scheme and advantages of the embodiments of the disclosure clearer, the technical scheme in the embodiments of the disclosure will be described clearly and completely with the accompanying drawings. Obviously, the described embodiments are only a part of the embodiments of the disclosure, but not the whole embodiments. Components of embodiments of the present disclosure generally described and illustrated herein may be arranged and designed in various different configurations. Therefore, the following detailed description of the embodiments of the present disclosure is not intended to limit the scope of the claimed disclosure, but merely represents selected embodiments of the disclosure. Based on the embodiments of the present disclosure, all other embodiments obtained by those skilled in the art without creative work belong to the scope of protection of the present disclosure.

It is found that different search strategies can be selected when searching data in the database. In order to select a search strategy with higher query efficiency, it is necessary to determine the query efficiency of each search strategy quickly and accurately.

Based on the above research, the present disclosure provides a database-based data query method, in which, a plurality of search strategies that can be selected are determined for the received data query request; for each search strategy, the corresponding data selection rate can be queried through cache querying, and the data selection rate here represents the query efficiency when filtering data in the database under the corresponding search strategy. Therefore, through the data selection rate determined under each search strategy, which search strategy is better to complete the data query can be determined, and thus, the efficiency of data query can be ensured.

In addition, because the same search strategy may be used for many times during data query, the data query method provided by the present disclosure also provides a way to cache the selection rate obtained under the search strategy, so as to reduce repeated calculation and improve the acquisition efficiency.

On this basis, if the selection rate corresponding to each search strategy is directly stored, the stored query efficiency may be difficult to accurately adapt to the data query request after the data changes because the data in the database changes. Therefore, the present disclosure also provides a dynamic caching mechanism to dynamically update and store the selection rate results obtained after data query with the same search strategy for multiple times, such that the target search strategy that best meets the current data query request can be accurately determined, thus, the processing speed of data query requests can be improved.

The shortcomings in the art as described-above are the results obtained by the inventor after practice and careful study. Therefore, the discovery process of the above problems and the solutions proposed in the present disclosure below should be the contributions made by the inventor to the present disclosure in the process of the present disclosure.

It should be noted that similar symbols and letters indicate similar items in the drawings, so once an item is defined in one drawing, it is not further defined and explained in subsequent drawings.

**In** order to facilitate the understanding of the embodiments, firstly, a database-based data query method disclosed in the embodiments of the present disclosure is introduced in detail. The executing subject of the data query method provided in embodiments of the present disclosure is generally an electronic device with certain computing power, which includes, for example, a terminal or a server or other processing equipment, and the terminal can be User Equipment (user equipment, UE), mobile devices, clients, terminals, cellular phones, cordless phones, Personal Digital Assistant (PDA), handheld devices, computing devices, vehicle-mounted devices, wearable devices, etc. In some implementations, the data query method can be realized by a processor by performing computer-readable instructions stored in a memory.

Next, the database-based data query method provided by the embodiments of the present disclosure will be described. The database-based data query method provided by the embodiments of the present disclosure can be specifically applied to query data in a database. The database described herein is different according to different application scenarios. For example, in business data management scenarios, such as a warehousing application scenario, it can specifically include the purchase and sale of goods and commodities, while in a file storage application scenario, it can specifically include the storage of pictures, documents, audio and video.

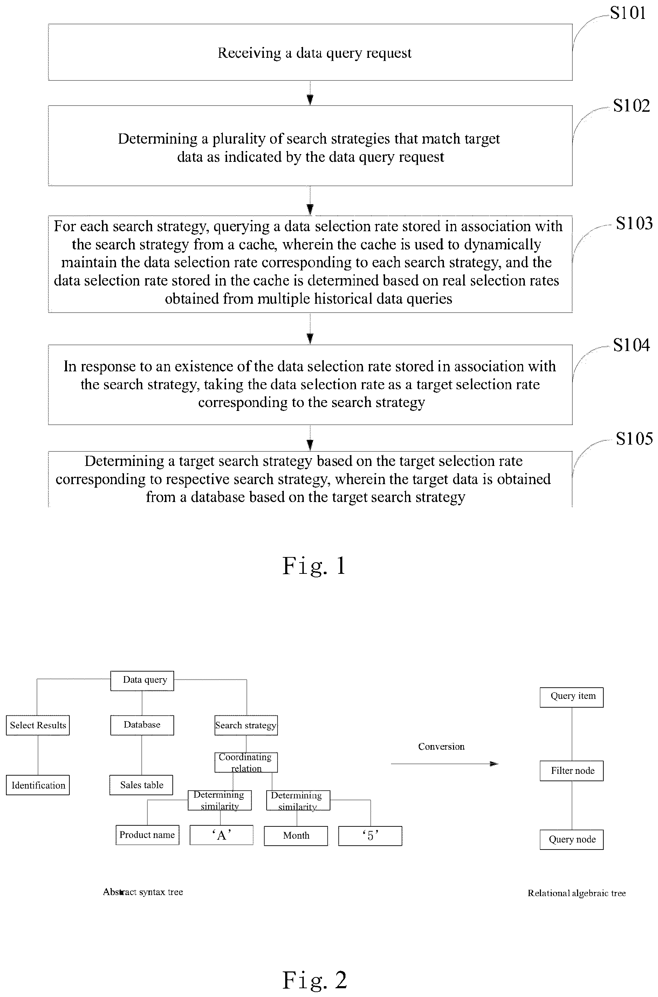

Referring to Fig. 1, a flowchart of a database-based data query method provided by embodiments of the present disclosure includes steps S101~S105:
S101: receiving a data query request;
S102: determining a plurality of search strategies that match target data as indicated by the data query request;
S103: for each search strategy, querying a data selection rate stored in association with the search strategy from a cache, wherein the cache is used to dynamically maintain the data selection rate corresponding to each search strategy, and the data selection rate stored in the cache is determined based on real selection rates obtained from multiple historical data queries;
S104: in response to an existence of the data selection rate stored in association with the search strategy, taking the data selection rate as a target selection rate corresponding to the search strategy;
S105: determining a target search strategy based on the target selection rate corresponding to respective search strategy, wherein the target data is obtained from a database based on the target search strategy.

S101~S105 will be described in detail below.

For S101 and S102 mentioned-above, firstly, the database is described. For the convenience of explanation, the database in the warehousing field is specifically selected for explanation in the embodiments of the present disclosure. Specifically, the database may store sales data, and the corresponding month is recorded under each sales data. For example, the database can specifically include the sales data of a brand from January to December of this year.

For this database, data queries can be used to obtain the data that needs to be queried in practical applications. For example, in the above example, it may specifically hope to obtain sales data for May. In order to enable the database to complete data queries based on actual query requirements, it may choose to send data query requests, which can express actual query requirements and enable the database to complete data queries at the computational level.

On this basis, the following two issues are considered in the embodiments of the present disclosure: first, how to determine the data query requests that can complete the data query in the database for the query requirements in practical application; second, for the determined data query requests, such as the above-mentioned data query request indicating to find the sales data in May, how to determine the specific search strategy, such as sequential scan or index scan, in the database with huge data storage.

The solutions to the above two issues are described below. First, for the data query requests, the query requirements can be declared and the data query requests can be generated by writing a query declaration statement. Continuing the above example, if the actual query requirement is to find the identification ("id") corresponding to the sales data of a product (marked as: A) in May in the sales table, the following query statement can be obtained:

```
  SELECT id
      FROM sales
      WHERE name = "A"
          AND month = "5"
```

In this way, the data query requests for the database querying can be determined. Then, for the way of selecting specific search strategy, a query optimizer using database can be selected, and through the Cost Based Optimizer, CBO), the search cost of each node in the syntax tree parsed by data query requests can be determined, in order to determine which search strategy to choose which can result in a relatively low overall cost.

Here, with the data query request, various search strategies matching the target data can be determined. In a possible case, when querying the database, a variety of alternative search strategies are prepared, so for any data query request, the search strategies matching the target data can be the multiple alternative search strategies prepared here. In another possible case, for data query requests corresponding to data of different data types, some corresponding search strategies can be further screened out according to experience from a variety of search strategies that are available, and when receiving data query requests corresponding to data of corresponding data types, specific search strategies that match the target data can also be determined according to the corresponding relationship after selecting.

Following the above example, how to determine the operator under the syntax tree and the way to determine the search cost may be explained. First, the query statement described above can be parsed into an abstract syntax tree (AST), and then converted into a relational algebraic tree, as shown in Fig. 2. The obtained relational algebraic tree specifically includes algebraic nodes, such as a filter node (also called "filter") or a query node (also called "table scan") as shown in the relational algebraic tree in Fig. 2.

In order to calculate the statistical information of each node, the cost-based optimizer CBO relies on a series of cost estimation models to derive the statistical information of each node and the execution cost from the statistical information of table granularity. These cost estimates are derived from the bottom up, that is, from the leaf node (table scan node) to the root node. Therefore, the accuracy of statistical information of table scan nodes, especially table scan with filter conditions, largely determines the accuracy of statistical information of downstream operators, and also determines the accuracy corresponding to the cost of the whole search strategy.

Therefore, when determining the specific search strategy through cost, it can be transformed into determining the search strategy according to the selectivity of filter conditions on the table scan node under different search strategies.

The following is illustrated by a brief example. In the above query example of sales table, if the search strategy of sequential search is adopted, it can specifically choose to search to get the data marked with date first, and then determine whether the date is in May, so after searching the database, every data with date will be queried; If the index search strategy is adopted, it can specifically choose to search the data with the month marked as "5", and after searching the database in this way, the query results may serve as the target data. In these two ways, the queried data in the database are different. Specifically, under the search strategy of sequential search, the queried data will be more than that under the search strategy of index search, that is, less data will be filtered out during the query, so the selection rate determined according to the queried data is high, which shows that this search strategy is expensive and therefore not suitable to be selected as the target data search strategy.

Therefore, in the embodiments of the present disclosure, for the received data query request, the specific search strategy that can be selected for use is specifically determined, for example, the data query request contains a plurality of selected search strategies, or a plurality of search strategies that can be determined according to the data query request, and then according to the selection rate determined under the search strategy, it is determined which search strategy is less expensive, such that this search strategy is selected to complete the search for the target data indicated to be queried under the data query request.

**In** the specific application process, when querying data in the database, if possible, the selection rates of different search strategies can be determined by sampling data from the database every time a data query request is received, so as to determine which search strategy is less expensive and more suitable for selection and use. However, in practical application, the following problems may occur: there may be query requests from many different users in a period of time, and these query requests are aimed at the same database, and the filter node obtained in the selected data query request is the same as the table scan node. Then in the above scenario, there will be repeated dynamic sampling process, resulting in performance loss and slow response speed.

**In** order to solve the above problems, in the embodiments of the present disclosure, the selection rate results obtained in historical search are specifically selected to be cached, such that the selection rate can be directly obtained from the selection rate results stored in the cache after the same data query is received next time, without determining the selection rate again, thus, the selection of the search strategy can be made more efficiently in the current time.

That is, for the above S103 and S104, for each search strategy, the data selection rate stored in association with the search strategy can be specifically queried from the cache, and if there is a data selection rate stored in association with the search strategy, the data selection rate is taken as the target selection rate corresponding to the search strategy.

Here, the data selection rate is determined based on each true selection rate obtained from multiple historical data queries.

The specific process of how to get the true selection rate under multiple historical data queries are described below. **In** practice, for a certain search strategy, it will be selected for the first time, and then it will be selected many times later.

When it is selected for the first time, it is easy to understand that there is no selection rate that can be stored in the cache in association with the search strategy. **In** order to determine whether the search strategy is a low-cost search strategy among the determined search strategies when it is selected for the first time, it will be selected to directly calculate and determine the selection rate corresponding to the search strategy. **In** addition, in order to improve the efficiency of calculating the selection rate, in the embodiments of the present disclosure, sampling data with relatively small data volume is specifically selected from a database with large data volume to determine the target selection rate corresponding to the search strategy.

That is, in a specific implementation, in response to the search strategy to be selected being a first-time search strategy, it is determined that there is no data selection rate associated with the search strategy, and the target selection rate corresponding to the search strategy is determined by sampling data obtained from the database.

For the above situation, when determining the target selection rate for the first-time search strategy, it can first obtain the sampling data from the database. When acquiring sampling data, the user can select different sampling granularity and/or sampling lines to acquire a certain amount of sampling data. In a possible case, a large number of sampling data can be obtained from the database by setting the sampling granularity and/or the number of post-sampling lines, thus, the sampling data can better reflect the data characteristics in the database, but because of the large amount of sampled data, it will be relatively more time-consuming to determine the selection rate. On the other hand, in another possible situation, if the sampling granularity and/or the number of rows after sampling are set, the sampling data with a small amount of data can be obtained, which can ensure that it takes a short time to determine the selection rate, but the obtained selection rate may not reflect the data characteristics of the whole database. Therefore, when selecting the sampling granularity and/or the number of sampling lines, it is specifically left to the user to choose, so as to ensure that the actual demand of balancing the efficiency and accuracy of calculating the selection rate is met.

For the sampling data obtained in the database, the sample data queried in the sampling data can be determined by using a certain search strategy, referring to the example provided above for details. Then, a proportion of the sample data in the sampling data can be used as the target selection rate determined for the search strategy. Because the sampling data is obtained from the database, it can also be used as the target selection rate of the database under the selected search strategy.

Here, the target selection rate calculated by the sampling data can be used to determine which search strategy is specifically selected among multiple search strategies in advance for this data query. At the same time, because the search strategy is selected, in order to get more accurate selection rate results when the search strategy is selected later, the search strategy will be specifically selected to query in the database, and the data selection rate corresponding to the search strategy will be determined based on the proportion of the queried data in the database during the query process.

That is, for the search strategy selected for the first time described above, the selection rate determined in the database will also be calculated and stored in the cache as the data selection rate corresponding to the search strategy, and the data selection rate can be called the next time the same search strategy is selected.

Specifically, when storing the search strategy and the corresponding data selection rate, the following methods can be adopted: when a search strategy is selected for the first time, determining the corresponding cache space for the search strategy, and store the data in key-value pair format in the cache space, in which the keyword (key) can identify the information such as the database corresponding to table scan, and the value can be used to store the data selection rate calculated subsequently. **In** this way, when the search strategy is selected next time, the data selection rate stored after the last search strategy is selected can be obtained from the cache space, so as to effectively reduce the data sampling frequency.

Because the data in the database is updated dynamically, the data in it may change in the next data query after completing one data query, which may affect the selection rate determined under the search strategy. Therefore, for the data selection rate corresponding to the search strategy under the cache dynamic updating and adaptive statistical information feedback are specifically adopted in the embodiments of the present disclosure.

Specifically, for a search strategy selected for many times in succession, if the change of the corresponding data selection rate of this search strategy is stable, it can be considered that the selection rate calculated again will not change greatly when it continues to be selected later, that is, after the data selection rate changes stably, it can be considered that the selection rate of the search strategy has converted to a more accurate result, thus, the stored data selection rate can be directly called when it is selected later.

Therefore, in the embodiments of the present disclosure, it is specifically determined whether the data selection rate obtained after the search strategy is selected for many times continuously is stable. **In** some implementations, a difference between a currently determined data selection rate and a data selection rate corresponding to a historical query process can be determined to determine whether the currently determined data selection rate meets a stability condition. If the stability condition is satisfied, the currently determined data selection rate is taken as a fixed data selection rate of the data query request under the search strategy.

Next, how to determine whether the currently determined data selection rate meets the stability condition will be explained. In a possible case, whether the stability condition is satisfied can be determined according to the difference between the data selection rate determined when the current search strategy is selected and the data selection rate stored many times in the historical query process. For example, under the search strategy including the current selection, the data selection rates obtained are 25.6%, 25.2% and 25% respectively, that is, the difference between two adjacent times gradually decreases and converges to 25%, so it can determine that the stability condition is r satisfied at present, and the 25% selection rate obtained this time is determined as a fixed data selection rate under the search strategy.

Therefore, the function of cache here is to dynamically store the data selection rate corresponding to each search strategy, that is, to dynamically maintain the data selection rate.

Or, in another possible situation, the numerical convergence of the selection rate may be expressed as convergence to a certain value, or it may be expressed as convergence to a certain interval. For example, when the data selection rate determined in the current search strategy selection and the data selection rate stored many times in the historical query process are included, the data selection rates obtained fall within the range of 25%~26%, and the error range of 1% that may be caused within this range is acceptable, thus, the selection rate obtained this time may be determined as a fixed data selection rate under the search strategy.

The above are only two specific examples provided, and other ways that can be used to determine whether the numerical change of the selectivity is regionally stable should also be within the protection scope of the embodiments of the present disclosure.

In this way, by determining whether the current data selection rate meets the stability condition, it can be determined whether it is necessary to recalculate and store the selection rate when the same search strategy is selected next time, or directly calling the stored data selection rate, so as to reduce the data sampling frequency while ensuring accuracy.

For storage, in order to determine whether to select a fixed data selection rate in the current time, that is, to determine whether to pay attention to the real selection rate result when selecting a search strategy next time, the tag information can be stored in association with the search strategy when selecting the search strategy for the first time, where the tag information specifically indicates that it is necessary to continue to pay attention to the selection rate corresponding to the search strategy, so the tag information will not change until the fixed data selection rate is determined for the search strategy. However, after determining the data selection rate at any time as a fixed data selection rate, it can be determined that there is no need to continue to pay attention to it, so the tag information can be changed to information indicating a fixed data selection rate, or the tag information can be deleted.

Therefore, in a specific implementation, whether the data selection rate in the cache meets the stability condition can be determined based on the tag information, and specifically, the tag information stored in the cache and associated with the search strategy under the data query request can be queried; when the tag information indicates that the data selection rate in the cache corresponding to the search strategy does not meet the stability condition, the search strategy is used to query in the database.

According to the explanation in the above embodiments, the database is updated dynamically, so if the data volume of the database changes greatly, the data selection rate corresponding to some earlier cached search strategies may be difficult to guarantee the accuracy in the current incremental database. Therefore, in the specific implementation, in response to the data variation of the data in the database exceeding the preset variation threshold, from among the search strategies stored in the cache, the search strategy to be deleted whose cache time exceeds the preset time threshold can be determined, and the search strategy can be deleted and its associated stored data selection rate can be deleted from the cache.

Here, the preset change threshold to measure whether there is a large data change in the database can be determined according to the actual situation or the data size of the database. For example, if the data size in the database is measured in tens of thousands, if the increment of the data size can be measured by several or hundreds, it will not have a great impact on the whole database, and it can be considered that the data selection rate corresponding to the search strategy will not change greatly under the current data change of the database.

When it is determined that the number of data change in the database exceeds the preset change threshold, for the data selection rate corresponding to the recently stored search strategy, the change of data in the database is gradually slow, so it has little influence on the data selection rate corresponding to the recently stored search strategy, but for the data selection rate corresponding to the earlier stored search strategy, with the passage of time, the data in the current database will accumulate more than the data in the database when the data selection rate was stored earlier. **In** addition, because the search strategy has not been continuously selected or updated within the preset time threshold, it can also be considered that the probability of being selected and used later is low, that is, there is no need to continue storage, so it can be deleted from the cache.

**In** this way, according to the above steps S103-S104, the corresponding target selection rate can be determined for plurality of search strategies determined this time for the received data query request.

According to the above step S105, after determining the target selection rate corresponding to each search strategy, the target search strategy that is finally used to complete the data query can be determined by the target selection rate corresponding to each search strategy, so as to obtain the target data through database query.

Here, the description in the above example can be referred. For example, if the database includes sales data of a certain brand from January to December of this year, the obtained target selection rate by sequential search may be, for example, 80%, which means that the queried data accounts for 80% of the database after one searching, while the target selection rate by index search may be, for example, 10%, the queried data is the final target data, thus, the index search method is adopted, which can query less data in the database and obtain the target data more easily, so it is more suitable to be selected. Thus, the search strategy of index search is determined to realize the search of the target data in the data query.

It can be understood by those skilled in the art that in the above-mentioned method of specific embodiments, the order of each step does not mean strict execution order and constitutes any limitation on the implementation process, and the specific execution order of each step can be determined according to its function and possible internal logic.

Based on the similar inventive concept, the embodiments of the present disclosure also provide a database-based data query apparatus corresponding to the above-described database-based data query method. Since the principle of solving problems by the apparatus in the embodiments of the present disclosure is similar to the above-mentioned data query method in the embodiments of the present disclosure, the implementation of the apparatus can refer to the implementation of the method, and the repetition is not repeated here.

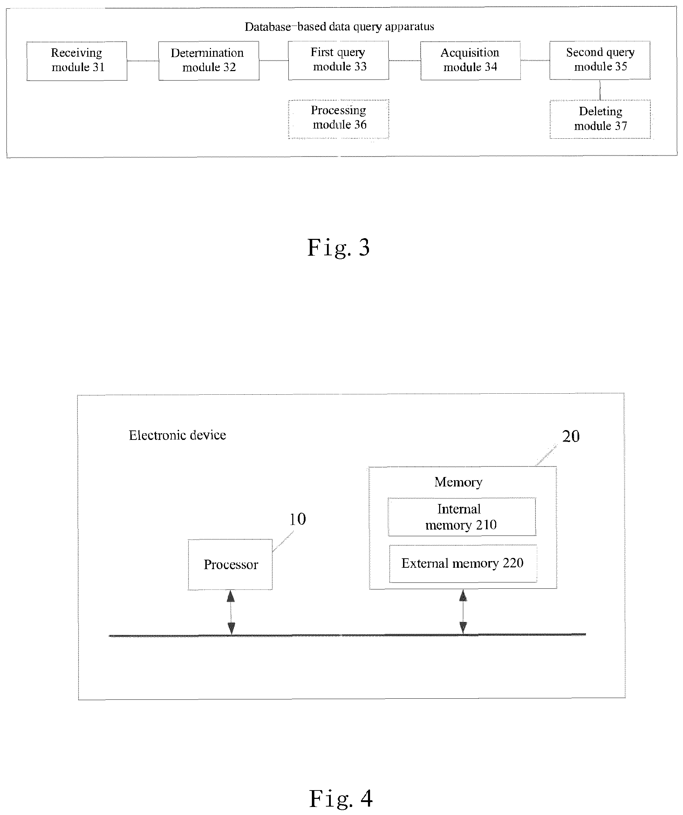

Referring to Fig. 3, which is a schematic diagram of the database-based data query apparatus provided by embodiments of the present disclosure, the apparatus includes a receiving module 31, a determination module 32, a first query module 33, an acquisition module 34, and a second query module 35:
The receiving module 31 is configured to receive a data query request.
The determination module 32 is configured to determine a plurality of search strategies that match target data as indicated by the data query request.
The first query module 33 is configured to, for each search strategy, query a data selection rate stored in association with the search strategy from a cache, wherein the cache is used to dynamically maintain the data selection rate corresponding to each search strategy, and the data selection rate stored in the cache is determined based on real selection rates obtained from multiple historical data queries.
The acquisition module 34 is configured to take, in response to an existence of the data selection rate stored in association with the search strategy, the data selection rate as a target selection rate corresponding to the search strategy.
The second query module 35 is configured to determine a target search strategy based on the target selection rate corresponding to respective search strategy, wherein the target data is obtained from a database based on the target search strategy.

In an alternative implementation, the apparatus further includes a processing module 36, configured to: in response to a search strategy to be selected being a first-time selected search strategy, determine that there is no data selection rate stored in association with the search strategy, and determine the target selection rate corresponding to the search strategy by sampling data obtained from the database.

In an alternative implementation, the determining the target selection rate corresponding to the search strategy by sampling data obtained from the database includes: acquiring the sampling data from the database, wherein the sampling data is determined based on a selected sampling granularity and/or a number of sampling lines; and determining sample data that has been queried in the sampling data by the search strategy, and taking a proportion of the sample data in the sampling data as the target selection rate associated with the search strategy.

In an alternative implementation, after determining the plurality of search strategies that match the target data, the determination module 32 is further configured to: perform queries in the database using each search strategy respectively, and determining a data selection rate corresponding to the search strategy based on a proportion of data that has been queried in the database during the query.

In an alternative implementation, after determining a data selection rate corresponding to the search strategy based on a proportion of data that has been queried in the database during the query, the determination module 32 is further configured to: compare a difference between a currently determined data selection rate and a data selection rate corresponding to a historical query process to determine whether the currently determined data selection rate meets a stability condition; and if the stability condition is satisfied, take the currently determined data selection rate as a fixed data selection rate of the data query request under the search strategy.

In an alternative implementation, the determination module 32 performing queries in the database using each search strategy respectively includes: querying tag information stored in the cache and associated with a search strategy under the data query request; and in response to the tag information indicates that a data selection rate in the cache corresponding to the search strategy does not meet the stability condition, querying in the database with the search strategy.

In an alternative implementation, the apparatus further includes a deleting module 37, configured to: in response to a data variation of data in the database exceeding a preset variation threshold, determine, among search strategies stored in the cache, a search strategy to be deleted whose cache time exceeds a preset time threshold, and delete the search strategy to be deleted and its associated stored data selection rate from the cache.

For the description of the processing flow of each module (or also may be circuit) in the apparatus and the interaction flow between modules, please refer to the relevant description in the above method embodiments, and will not be described in detail here.

The embodiments of the present disclosure also provide an electronic device, that is, a computer device. As shown in Fig. 4, which is a schematic structural diagram of the electronic device provided by the embodiments of the present disclosure, the electronic device includes:
A processor 10 and a memory 20. The memory 20 stores machine-readable instructions executable by the processor 10 for executing the machine-readable instructions stored in the memory 20. When the machine-readable instructions are executed by the processor 10, the processor 10 executes the following steps:
receiving a data query request; determining a plurality of search strategies that match target data as indicated by the data query request; for each search strategy, querying a data selection rate stored in association with the search strategy from a cache, wherein the cache is used to dynamically maintain the data selection rate corresponding to each search strategy, and the data selection rate stored in the cache is determined based on real selection rates obtained from multiple historical data queries; in response to an existence of the data selection rate stored in association with the search strategy, taking the data selection rate as a target selection rate corresponding to the search strategy; and determining a target search strategy based on the target selection rate corresponding to respective search strategy, wherein the target data is obtained from a database based on the target search strategy.

The memory 20 includes an internal memory 210 and an external memory 220. The internal memory 210 herein is also called internal storage, which is used to temporarily store the operation data for the processor 10 and the data exchangeable with an external memory 220 such as a hard disk. The processor 10 exchanges data with the external memory 220 through the internal memory 210.

The specific execution process of the above instructions can refer to the steps of the database-based data query method described in the embodiments of the present disclosure, and will not be repeated here.

The embodiments of the present disclosure also provide a non-transitory computer-readable storage medium, on which a computer program is stored, and when the computer program is executed by a processor, the steps of the database-based data query method described in the above method embodiments are executed. The storage medium may be a volatile or nonvolatile computer-readable storage medium.

The embodiments of the present disclosure also provide a computer program product, which carries a program code, and the program code includes instructions that can be used to execute the steps of the database-based data query method described in the above-mentioned method embodiments. For details, please refer to the above-mentioned method embodiments, which is not repeated here.

The above computer program products can be realized by hardware, software or a combination thereof. In an alternative implementation, the computer program product is embodied as a computer storage medium, and in another alternative implementation, the computer program product is embodied as a software product, such as a Software Development Kit (SDK) and the like.

It can be clearly understood by those skilled in the art that for the convenience and conciseness of description, the specific working process of the system and device described above can refer to the corresponding process in the aforementioned method embodiments, and will not be repeated here. In embodiments provided by this disclosure, it should be understood that the disclosed systems, devices and methods can be realized in other ways. The device embodiments described above are only schematic. For example, the division of the units is only a logical function division, and there may be another division method in actual implementations. For example, multiple units or components may be combined or integrated into another system, or some features may be ignored or not implemented. On the other hand, the mutual coupling or direct coupling or communication connection shown or discussed can be indirect coupling or communication connection through some communication interfaces, devices or units, which can be in electrical, mechanical or other forms.

The units described as separate components may or may not be physically separated, and the components displayed as units may or may not be physical units, that is, they may be located in one place or distributed to multiple network units. Some or all of the units can be selected according to actual needs to achieve the purpose of this embodiment.

In addition, each functional unit in the embodiments of the present disclosure may be integrated into one processing unit (or processing circuit), or each unit may exist physically alone, or two or more units may be integrated into one unit.

If the functions are realized in the form of software functional units and sold or used as independent products, they can be stored in a processor-executable nonvolatile computer-readable storage medium. Based on this understanding, the technical solution of the present disclosure can be embodied in the form of a software product, which is stored in a storage medium and includes instructions to make an electronic device (which can be a personal computer, a server, a network device, etc.) execute all or part of the steps of the method described in various embodiments of the present disclosure. The aforementioned storage media may include: U disk, mobile hard disk, Read-Only Memory (ROM), Random Access Memory (RAM), magnetic disk or optical disk and other media that can store program codes.

Finally, it should be explained that the above-mentioned embodiments are only specific embodiments of the present disclosure, which are used to illustrate the technical scheme of the present disclosure, but not to limit it. Therefore, the scope of protection of the present disclosure should be based on the scope of protection of the claims.

## Claims

1. A database-based data query method, comprising:
receiving a data query request (S101);
determining a plurality of search strategies that match target data as indicated by the data query request (S102);
for each search strategy, querying a data selection rate stored in association with the search strategy from a cache, wherein the cache is used to dynamically maintain the data selection rate corresponding to each search strategy, and the data selection rate stored in the cache is determined based on real selection rates obtained from multiple historical data queries (S103);
in response to an existence of the data selection rate stored in association with the search strategy, taking the data selection rate as a target selection rate corresponding to the search strategy (S104);
determining a target search strategy based on the target selection rate corresponding to respective search strategy, wherein the target data is obtained from a database based on the target search strategy (S105); and
wherein the method is **characterized in that**:
in response to a search strategy to be selected being a first-time selected search strategy, determining that there is no data selection rate stored in association with the search strategy, and determining the target selection rate corresponding to the search strategy by sampling data obtained from the database.

2. The method according to claim 1, wherein the determining the target selection rate corresponding to the search strategy by sampling data obtained from the database comprises:
acquiring the sampling data from the database, wherein the sampling data is determined based on a selected sampling granularity and/or a number of sampling lines; and
determining sample data that has been queried in the sampling data by the search strategy, and taking a proportion of the sample data in the sampling data as the target selection rate associated with the search strategy.

3. The method according to any one of claims 1-2, wherein, after determining the plurality of search strategies that match the target data, the method further comprises:
performing queries in the database using each search strategy respectively, and determining a data selection rate corresponding to the search strategy based on a proportion of data that has been queried in the database during the query.

4. The method according to claim 3, wherein, after determining a data selection rate corresponding to the search strategy based on a proportion of data that has been queried in the database during the query, the method further comprises:
comparing a difference between a currently determined data selection rate and a data selection rate corresponding to a historical query process to determine whether the currently determined data selection rate meets a stability condition; and
if the stability condition is satisfied, taking the currently determined data selection rate as a fixed data selection rate of the data query request under the search strategy.

5. The method according to claim 3, wherein the performing queries in the database using each search strategy respectively comprises:
querying tag information stored in the cache and associated with a search strategy under the data query request; and
in response to the tag information indicates that a data selection rate in the cache corresponding to the search strategy does not meet the stability condition, querying in the database with the search strategy.

6. The method according to any one of claims 1-5, further comprising:
in response to a data variation of data in the database exceeding a preset variation threshold, determining, among search strategies stored in the cache, a search strategy to be deleted whose cache time exceeds a preset time threshold, and deleting the search strategy to be deleted and its associated stored data selection rate from the cache.

7. A database-based data query apparatus, comprising:
a receiving module (31), configured to receive a data query request;
a determination module (32), configured to determine a plurality of search strategies that match target data as indicated by the data query request;
a first query module (33), configured to, for each search strategy, query a data selection rate stored in association with the search strategy from a cache, wherein the cache is used to dynamically maintain the data selection rate corresponding to each search strategy, and the data selection rate stored in the cache is determined based on real selection rates obtained from multiple historical data queries;
an acquisition module (34), configured to take, in response to an existence of the data selection rate stored in association with the search strategy, the data selection rate as a target selection rate corresponding to the search strategy;
a second query module (35), configured to determine a target search strategy based on the target selection rate corresponding to respective search strategy, wherein the target data is obtained from a database based on the target search strategy; and
wherein the apparatus is **characterized in that**:
a processing module (36), configured to: in response to a search strategy to be selected being a first-time selected search strategy, determine that there is no data selection rate stored in association with the search strategy, and determine the target selection rate corresponding to the search strategy by sampling data obtained from the database.

8. The apparatus according to claim 7, wherein the processing module, determining the target selection rate corresponding to the search strategy by sampling data obtained from the database, comprises:
acquiring the sampling data from the database, wherein the sampling data is determined based on a selected sampling granularity and/or a number of sampling lines; and
determining sample data that has been queried in the sampling data by the search strategy, and taking a proportion of the sample data in the sampling data as the target selection rate associated with the search strategy.

9. The apparatus according to any one of claims 7-8, wherein, after determining the plurality of search strategies that match the target data, the determination module is further configured to:
perform queries in the database using each search strategy respectively, and determine a data selection rate corresponding to the search strategy based on a proportion of data that has been queried in the database during the query.

10. The apparatus according to claim 9, wherein, after determining a data selection rate corresponding to the search strategy based on a proportion of data that has been queried in the database during the query, the determination module is further configured to:
compare a difference between a currently determined data selection rate and a data selection rate corresponding to a historical query process to determine whether the currently determined data selection rate meets a stability condition; and
if the stability condition is satisfied, take the currently determined data selection rate as a fixed data selection rate of the data query request under the search strategy.

11. The apparatus according to claim 9, wherein the determination module, performing queries in the database using each search strategy respectively, comprises:
querying tag information stored in the cache and associated with a search strategy under the data query request; and
in response to the tag information indicates that a data selection rate in the cache corresponding to the search strategy does not meet the stability condition, querying in the database with the search strategy.

12. An electronic device, comprising a processor and a memory, wherein the memory stores machine-readable instructions executable by the processor, and the processor is configured to execute the machine-readable instructions stored in the memory, and when the machine-readable instructions are executed by the processor, the processor executes the steps of the database-based data query method according to any one of claims 1 to 6.

13. A non-transitory computer-readable storage medium with a computer program stored thereon, wherein when the computer program is executed by an electronic device, the electronic device executes the steps of the database-based data query method according to any one of claims 1 to 6.

## Patentansprüche

1. Datenbankbasiertes Datenabfrageverfahren, das umfasst:
Empfangen einer Datenabfrageanforderung (S101);
Bestimmen einer Vielzahl von Suchstrategien, die mit Zieldaten wie sie von der Datenabfrageanforderung angegeben sind, übereinstimmen (S102);
Abfragen für jede Suchstrategie einer Datenauswahlrate, die in Zuordnung zu der Suchstrategie aus einem Cache gespeichert ist, wobei der Cache dazu verwendet wird, die Datenauswahlrate, die jeder Suchstrategie entspricht, dynamisch zu führen, und die in dem Cache gespeicherte Datenauswahlrate basierend auf realen Auswahlraten bestimmt wird, die aus mehreren historischen Datenabfragen erhalten werden (S103).
als Reaktion auf ein Vorhandensein der in Zuordnung zu der Suchstrategie gespeicherten Datenauswahlrate, Übernehmen der Datenauswahlrate als eine Zielauswahlrate, die der Suchstrategie entspricht (S104);
Bestimmen einer Zielsuchstrategie basierend auf der Zielauswahlrate, die der jeweiligen Suchstrategie entspricht, wobei die Zieldaten basierend auf der Zielsuchstrategie aus einer Datenbank erhalten werden (S105); und
wobei das Verfahren **gekennzeichnet ist durch**:
als Reaktion darauf, dass eine auszuwählende Suchstrategie eine zum ersten Mal ausgewählte Suchstrategie ist, Bestimmen, dass keine Datenauswahlrate in Zuordnung zu der Suchstrategie gespeichert ist, und Bestimmen der Zielauswahlrate, die der Suchstrategie entspricht, **durch** Abtasten von Daten, die aus der Datenbank erhalten werden.

2. Verfahren nach Anspruch 1, wobei das Bestimmen der Zielauswahlrate, die der Suchstrategie entspricht, durch Abtasten der Daten, die aus der Datenbank erhalten werden, umfasst:
Erheben der Abtastdaten aus der Datenbank, wobei die Abtastdaten basierend auf einer ausgewählten Abtastgranularität und/oder einer Anzahl von Abtastlinien bestimmt werden; und
Bestimmen der Abtastdaten, die von der Suchstrategie in den Abtastdaten abgefragt wurden, und Übernehmen eines Anteils der Abtastdaten in den Abtastdaten als die Zielauswahlrate, die der Suchstrategie zugeordnet ist.

3. Verfahren nach einem der Ansprüche 1-2, wobei das Verfahren nach dem Bestimmen der Vielzahl von Suchstrategien, die mit den Zieldaten übereinstimmen, weiter umfasst:
Durchführen von Abfragen in der Datenbank unter Verwendung jeweils jeder Suchstrategie und Bestimmen einer Datenauswahlrate, die der Suchstrategie entspricht, basierend auf einem Anteil von Daten, die während der Abfrage in der Datenbank abgefragt wurden.

4. Verfahren nach Anspruch 3, wobei nach dem Bestimmen einer Datenauswahlrate, die der Suchstrategie entspricht, basierend auf einem Anteil von Daten, die in der Datenbank während der Abfrage abgefragt wurden, das Verfahren weiter umfasst:
Vergleichen einer Differenz zwischen einer aktuell bestimmten Datenauswahlrate und einer Datenauswahlrate, die einem historischen Abfrageprozess entspricht, um zu bestimmen, ob die aktuell bestimmte Datenauswahlrate eine Stabilitätsbedingung erfüllt; und
wenn die Stabilitätsbedingung erfüllt ist, Übernehmen der aktuell bestimmten Datenauswahlrate als feste Datenauswahlrate der Datenabfrageanforderung gemäß der Suchstrategie.

5. Verfahren nach Anspruch 3, wobei das Durchführen von Abfragen in der Datenbank unter Verwendung jeweils jeder Suchstrategie umfasst:
Abfragen von Tag-Informationen, die in dem Cache gespeichert sind und einer Suchstrategie gemäß der Datenabfrageanforderung zugeordnet sind; und
als Reaktion darauf, dass die Tag-Informationen angeben, dass eine Datenauswahlrate in dem Cache, die der Suchstrategie entspricht, die Stabilitätsbedingung nicht erfüllt, Abfragen in der Datenbank während der Suchstrategie.

6. Verfahren nach einem der Ansprüche 1-5, weiter umfassend:
als Reaktion darauf, dass eine Datenvariation von Daten in der Datenbank einen voreingestellten Variationsschwellenwert überschreitet, Bestimmen unter den in dem Cache gespeicherten Suchstrategien einer zu löschenden Suchstrategie, deren Cache-Zeit einen voreingestellten Zeitschwellenwert überschreitet, und Löschen der zu löschenden Suchstrategie und ihrer zugeordneten gespeicherten Datenauswahlrate aus dem Cache.

7. Datenbankbasierte Datenabfrageeinrichtung, die umfasst:
ein Empfangsmodul (31), das dazu konfiguriert ist, eine Datenabfrageanforderung zu empfangen;
ein Bestimmungsmodul (32), das dazu konfiguriert ist, eine Vielzahl von Suchstrategien zu bestimmen, die mit Zieldaten wie von der Datenabfrageanforderung angegeben sind, übereinstimmen;
ein erstes Abfragemodul (33), das dazu konfiguriert ist, für jede Suchstrategie eine Datenauswahlrate abzufragen, die in Zuordnung zu der Suchstrategie aus einem Cache gespeichert ist, wobei der Cache dazu verwendet wird, die jeder Suchstrategie entsprechende Datenauswahlrate dynamisch zu führen, und die in dem Cache gespeicherte Datenauswahlrate basierend auf realen Auswahlraten bestimmt wird, die aus mehreren historischen Datenabfragen erhalten werden;
ein Erhebungsmodul (34), das dazu konfiguriert ist, als Reaktion auf ein Vorhandensein einer Datenauswahlrate, die in Zuordnung mit der Suchstrategie gespeichert ist, die Datenauswahlrate als eine Zielauswahlrate, die der Suchstrategie entspricht, zu übernehmen;
ein zweites Abfragemodul (35), das dazu konfiguriert ist, eine Zielsuchstrategie basierend auf der Zielauswahlrate, die der jeweiligen Suchstrategie entspricht, zu bestimmen, wobei die Zieldaten aus einer Datenbank basierend auf der Zielsuchstrategie erhalten werden; und
wobei die Einrichtung **dadurch gekennzeichnet ist, dass**:
ein Verarbeitungsmodul (36), das dazu konfiguriert: als Reaktion darauf, dass eine auszuwählende Suchstrategie eine zum ersten Mal ausgewählte Suchstrategie ist, zu bestimmen, dass keine Datenauswahlrate in Zuordnung mit der Suchstrategie gespeichert ist, und die Zielauswahlrate, die der Suchstrategie entspricht, durch Abtasten von Daten, die aus der Datenbank erhalten werden, zu bestimmen.

8. Einrichtung nach Anspruch 7, wobei das Verarbeitungsmodul, das die Ziel Suchrate, die der Suchstrategie entspricht, durch Abtastdaten, die aus der Datenbank erhalten werden, bestimmt, umfasst:
Erheben der Abtastdaten aus der Datenbank, wobei die Abtastdaten basierend auf einer ausgewählten Abtastgranularität und/oder einer Anzahl von Abtastlinien bestimmt werden; und
Bestimmen der Abtastdaten, die von der Suchstrategie in den Abtastdaten abgefragt wurden, und Übernehmen eines Anteils der Abtastdaten in den Abtastdaten als die Zielauswahlrate, die der Suchstrategie zugeordnet ist.

9. Einrichtung nach einem der Ansprüche 7-8, wobei das Bestimmungsmodul nach dem Bestimmen der Vielzahl von Suchstrategien, die mit den Zieldaten übereinstimmen, weiter konfiguriert ist zum:
Durchführen von Abfragen in der Datenbank unter Verwendung jeweils jeder Suchstrategie und Bestimmen einer Datenauswahlrate, die der Suchstrategie entspricht, basierend auf einem Anteil von Daten, die während der Abfrage in der Datenbank abgefragt wurden.

10. Einrichtung nach Anspruch 9, wobei das Bestimmungsmodul nach dem Bestimmen einer Datenauswahlrate, die der Suchstrategie entspricht, basierend auf einem Anteil von Daten, die in der Datenbank während der Abfrage abgefragt wurden, weiter konfiguriert ist zum:
Vergleichen einer Differenz zwischen einer aktuell bestimmten Datenauswahlrate und einer Datenauswahlrate, die einem historischen Abfrageprozess entspricht, um zu bestimmen, ob die aktuell bestimmte Datenauswahlrate eine Stabilitätsbedingung erfüllt; und
wenn die Stabilitätsbedingung erfüllt ist, Übernehmen der aktuell bestimmten Datenauswahlrate als feste Datenauswahlrate der Datenabfrageanforderung gemäß der Suchstrategie.

11. Einrichtung nach Anspruch 9, wobei das Bestimmungsmodul, das Abfragen in der Datenbank unter Verwendung jeweils jeder Suchstrategie durchführt, umfasst:
Abfragen von Tag-Informationen, die in dem Cache gespeichert sind und einer Suchstrategie gemäß der Datenabfrageanforderung zugeordnet sind; und
als Reaktion darauf, dass die Tag-Informationen angeben, dass eine Datenauswahlrate in dem Cache, die der Suchstrategie entspricht, die Stabilitätsbedingung nicht erfüllt, Abfragen in der Datenbank während der Suchstrategie.

12. Elektronische Vorrichtung, die einen Prozessor und einen Speicher umfasst, wobei der Speicher maschinenlesbare Anweisungen speichert, die von dem Prozessor ausgeführt werden können, und der Prozessor dazu konfiguriert ist, die in dem Speicher gespeicherten maschinenlesbaren Anweisungen auszuführen, und wenn die maschinenlesbaren Anweisungen von dem Prozessor ausgeführt werden, der Prozessor die Schritte des datenbankbasierten Datenabfrageverfahrens nach einem der Ansprüche 1 bis 6 ausführt.

13. Nichtflüchtiges, computerlesbares Speichermedium mit einem darauf gespeicherten Computerprogramm, wobei, wenn das Computerprogramm von einer elektronischen Vorrichtung ausgeführt wird, die elektronische Vorrichtung die Schritte des datenbankbasierten Datenabfrageverfahrens nach einem der Ansprüche 1 bis 6 ausführt.

## Revendications

1. Procédé de demande de données sur la base d'une base de données, comprenant :
la réception d'une requête de demande de données (S101) ;
la détermination d'une pluralité de stratégies de recherche qui correspondent à des données cibles telles qu'indiquées par la requête de demande de données (S102) ;
pour chaque stratégie de recherche, la demande d'un taux de sélection de données stocké en association avec la stratégie de recherche à partir d'un cache, dans lequel le cache est utilisé pour maintenir dynamiquement le taux de sélection de données correspondant à chaque stratégie de recherche, et le taux de sélection de données stocké dans le cache est déterminé sur la base de taux de sélection réels obtenus à partir de multiples requêtes de données historiques (S103) ;
en réponse à l'existence du taux de sélection de données stocké en association avec la stratégie de recherche, la prise du taux de sélection de données comme taux de sélection cible correspondant à la stratégie de recherche (S104) ;
la détermination d'une stratégie de recherche cible sur la base du taux de sélection cible correspondant à une stratégie de recherche respective, dans lequel les données cibles sont obtenues à partir d'une base de données sur la base de la stratégie de recherche cible (S105) ; et
dans lequel le procédé est **caractérisé en ce que** :
en réponse à une stratégie de recherche à sélectionner étant une stratégie de recherche sélectionnée pour la première fois, la détermination qu'il n'existe aucun taux de sélection de données stocké en association avec la stratégie de recherche, et la détermination du taux de sélection cible correspondant à la stratégie de recherche par échantillonnage de données obtenues de la base de données.

2. Procédé selon la revendication 1, dans lequel la détermination du taux de sélection cible correspondant à la stratégie de recherche par échantillonnage de données obtenues à partir de la base de données comprend :
l'acquisition des données d'échantillonnage à partir de la base de données, dans lequel les données d'échantillonnage sont déterminées sur la base d'une granularité d'échantillonnage sélectionnée et/ou d'un nombre de lignes d'échantillonnage ; et
la détermination de données d'échantillon qui ont été demandées dans les données d'échantillonnage par la stratégie de recherche, et la prise d'une proportion des données d'échantillon dans les données d'échantillonnage comme taux de sélection cible associé à la stratégie de recherche.

3. Procédé selon l'une quelconque des revendications 1-2, dans lequel, après la détermination de la pluralité de stratégies de recherche correspondant aux données cibles, le procédé comprend en outre :
la réalisation de demandes dans la base de données respectivement à l'aide de chaque stratégie de recherche, et la détermination d'un taux de sélection de données correspondant à la stratégie de recherche sur la base d'une proportion de données qui ont été demandées dans la base de données au cours de la demande.

4. Procédé selon la revendication 3, dans lequel, après la détermination d'un taux de sélection de données correspondant à la stratégie de recherche sur la base d'une proportion de données demandées dans la base de données au cours de la demande, le procédé comprend en outre :
la comparaison de la différence entre un taux de sélection de données actuellement déterminé et un taux de sélection de données correspondant à un processus de demande historique afin de déterminer si le taux de sélection de données actuellement déterminé remplit une condition de stabilité ;
si la condition de stabilité est remplie, la prise du taux de sélection de données actuellement déterminé comme taux de sélection de données fixe de la requête de demande de données dans le cadre de la stratégie de recherche.

5. Procédé selon la revendication 3, dans lequel la réalisation de demandes dans la base de données respectivement à l'aide de chaque stratégie de recherche comprend :
la demande d'informations d'étiquette stockées dans le cache et associées à une stratégie de recherche dans le cadre de la requête de demande de données ; et
en réponse aux informations d'étiquette indiquant qu'un taux de sélection de données dans le cache correspondant à la stratégie de recherche ne remplit pas la condition de stabilité, la réalisation de la demande dans la base de données avec la stratégie de recherche.

6. Procédé selon l'une quelconque des revendications 1-5, comprenant en outre :
en réponse à une variation de données dans la base de données dépassant un seuil de variation prédéfini, la détermination, parmi des stratégies de recherche stockées dans le cache, d'une stratégie de recherche à supprimer dont un temps de cache dépasse un seuil de temps prédéfini, et la suppression de la stratégie de recherche à supprimer et de son taux de sélection de données stockées associé du cache.

7. Appareil de demande de données sur la base dune base de données, comprenant :
un module de réception (31), configuré pour recevoir une requête de demande de données ;
un module de détermination (32), configuré pour déterminer une pluralité de stratégies de recherche qui correspondent à des données cibles telles qu'indiquées par la requête de demande de données ;
un premier module de demande (33), configuré pour, pour chaque stratégie de recherche, demander un taux de sélection de données stocké en association avec la stratégie de recherche à partir d'un cache, dans lequel le cache est utilisé pour maintenir dynamiquement le taux de sélection de données correspondant à chaque stratégie de recherche, et le taux de sélection de données stocké dans le cache est déterminé sur la base de taux de sélection réels obtenus à partir de multiples demandes de données historiques ;
un module d'acquisition (34), configuré pour prendre, en réponse à l'existence du taux de sélection de données stocké en association avec la stratégie de recherche, le taux de sélection de données comme taux de sélection cible correspondant à la stratégie de recherche ;
un second module de demande (35), configuré pour déterminer une stratégie de recherche cible sur la base du taux de sélection cible correspondant à une stratégie de recherche respective, dans lequel les données cibles sont obtenues à partir d'une base de données sur la base de la stratégie de recherche cible ; et
dans lequel l'appareil est **caractérisé par** :
un module de traitement (36), configuré pour : en réponse à une stratégie de recherche à sélectionner étant une stratégie de recherche sélectionnée pour la première fois, déterminer qu'il n'existe aucun taux de sélection de données stocké en association avec la stratégie de recherche, et déterminer le taux de sélection cible correspondant à la stratégie de recherche en échantillonnant des données obtenues de la base de données.

8. Appareil selon la revendication 7, dans lequel le module de traitement, déterminant le taux de sélection cible correspondant à la stratégie de recherche par échantillonnage de données obtenues de la base de données, comprend :
l'acquisition des données d'échantillonnage à partir de la base de données, dans lequel les données d'échantillonnage sont déterminées sur la base d'une granularité d'échantillonnage sélectionnée et/ou d'un nombre de lignes d'échantillonnage ; et
la détermination de données d'échantillon qui ont été demandées dans les données d'échantillonnage par la stratégie de recherche, et la prise d'une proportion des données d'échantillon dans les données d'échantillonnage comme taux de sélection cible associé à la stratégie de recherche.

9. Appareil selon l'une quelconque des revendications 7-8, dans lequel, après la détermination de la pluralité de stratégies de recherche correspondant aux données cibles, le module de détermination est en outre configuré pour :
réaliser des demandes dans la base de données respectivement à l'aide de chaque stratégie de recherche et déterminer un taux de sélection de données correspondant à la stratégie de recherche sur la base d'une proportion de données qui ont été demandées dans la base de données au cours de la demande.

10. Appareil selon la revendication 9, dans lequel, après la détermination d'un taux de sélection de données correspondant à la stratégie de recherche sur la base d'une proportion de données demandées dans la base de données au cours de la demande, le module de détermination est en outre configuré pour :
comparer une différence entre un taux de sélection de données actuellement déterminé et un taux de sélection de données correspondant à un processus de demande historique afin de déterminer si le taux de sélection de données actuellement déterminé remplit une condition de stabilité ; et
si la condition de stabilité est remplie, prendre le taux de sélection de données actuellement déterminé comme taux de sélection de données fixe de la requête de demande de données dans le cadre de la stratégie de recherche.

11. Appareil selon la revendication 9, dans lequel le module de détermination, réalisant des demandes dans la base de données respectivement à l'aide de chaque stratégie de recherche, comprend :
la demande d'informations d'étiquette stockées dans le cache et associées à une stratégie de recherche dans le cadre de la requête de demande de données ; et
en réponse aux informations d'étiquette indiquant qu'un taux de sélection de données dans le cache correspondant à la stratégie de recherche ne remplit pas la condition de stabilité, la réalisation de la demande dans la base de données avec la stratégie de recherche.

12. Dispositif électronique comprenant un processeur et une mémoire, dans lequel la mémoire stocke des instructions lisibles par machine exécutables par le processeur, et le processeur est configuré pour exécuter les instructions lisibles par machine stockées dans la mémoire et, lorsque les instructions lisibles par machine sont exécutées par le processeur, le processeur exécute les étapes du procédé de demande de données sur la base d'une base de données selon l'une quelconque des revendications 1 à 6.

13. Support de stockage non transitoire lisible par ordinateur sur lequel est stocké un programme informatique, dans lequel, lorsque le programme informatique est exécuté par un dispositif électronique, le dispositif électronique exécute les étapes du procédé de demande de données sur la base d'une base de données selon l'une quelconque des revendications 1 à 6.
